# EUROPEAN PATENT APPLICATION

(11) **EP 0 789 050 A2**
(43) Date of publication of application: **13.08.1997**
(21) Application number: 97102109.2
(22) Date of filing: 10.02.1997
(51) Int. Cl.: C08J 7/04, C09D 183/04, C09D 133/14

(54) **Composite coating film comprising silane compound and method for forming the same**

(30) Priority: 09.02.1996 JP 23722/96
(71) Applicant: SUMITOMO CHEMICAL COMPANY, LIMITED, Chuo-ku Osaka 541 (JP)
(72) Inventor: Ochiai, Shinsuke, Nishinomiya-shi, Hyogo-ken (JP); Yasunori, Yukio, Ikeda-shi, Osaka-fu (JP)
(74) Representative: VOSSIUS & PARTNER

(57) **Abstract**

A composite coating film including a hard coat layer which is formed from a polymerizable composition comprising 100 wt. parts of a polymerizable compound having at least two (meth)acryloyloxy groups in the molecule and 1 to 30 wt. parts of a silane compound having at least one group which forms a silanol group through hydrolysis in the molecule, and a layer of a silane compound having at least one group which forms a silanol group through hydrolysis in the molecule formed on said hard coat layer, which film has good durability.

## Description

The present invention relates to a highly durable composite coating film comprising a silane compound and a method for forming the same on the surface of a resin article advantageously even in the industrial scale.

It is well known that various properties can be semi-permanently imparted to the surfaces of glass or resin articles by treating a deposited coating of inorganic compounds which has been formed on the surfaces of such articles with a silane compound and forming a chemical bond between the surfaces of the substrate articles and the silane compound. Such treatment is widely used in industries.

An application of the treatment with the silane compound is the treatment of front plates for display planes of office automation equipments or lenses for glasses. The surfaces of the front plates and the lenses for glasses are contaminated with finger marks, fingerprints, sweat, cosmetics and the like when they are used. The treatment of the surfaces of such front plates or lenses with certain silane compounds prevents the contamination or facilitates wiping off of the contamination.

For example, JP-A-2-248480 and JP-A-6-184527 disclose an article having a stain-resistant film comprising a layer of a fluoroalkylsilane compound on a glass plate. JP-A-6-256756 discloses an article having a stain-resistant film comprising a layer consisting of a fluoroalkylsilane compound and a polysiloxane compound on a glass plate.

Window panes for buildings have problems that stains caused by rain, mud or exhaust gas adhere to their surfaces and deteriorate transparency of the window panes. Therefore, stain-resistant treatment of window panes is highly desired.

In general, stain resistance is imparted to the surfaces of resin articles by coating the surfaces with fluororesins such as polytetrafluoroethylene, polyvinylidene fluoride and the like.

The coating of conventional silane compounds can be applied directly on the surfaces of glass articles. When the coating of conventional silane compounds is applied directly on the surfaces of resin articles, it is easily peeled off since it is not chemically bonded with the resin articles. To solve this problem, a deposited coating of inorganic compounds such as silicon dioxide should be formed on the surfaces of the resin articles prior to the formation of the coating film of the silane compounds, but the process for the deposition of inorganic compounds is troublesome, and increases the production costs.

One object of the present invention is to provide a highly durable composite coating film comprising a silane compound.

Another object of the present invention is to provide a method for forming a highly durable composite coating film comprising a silane compound on the surface of a resin article.

According to the first aspect, the present invention provides a composite coating film comprising:
a hard coat layer which is formed from a polymerizable composition comprising 100 wt. parts of a polymerizable compound having at least two (meth)acryloyloxy groups in the molecule and 1 to 30 wt. parts of a silane compound having at least one group which forms a silanol group through hydrolysis in the molecule, and
a layer of a silane compound having at least one group which forms a silanol group through hydrolysis in the molecule formed on said hard coat layer.

According to the second aspect, the present invention provides a method for forming a composite coating film comprising a silane compound, which method comprises the steps of:
(1) coating the surface of a resin article with a polymerizable composition which comprises 100 wt. parts of a polymerizable compound having at least two (meth)acryloyloxy groups in the molecule and 1 to 30 wt. parts of a silane compound having at least one group which forms a silanol group through hydrolysis in the molecule and curing the coated polymerizable composition to form a hard coat layer, and
(2) coating the surface of said hard coat layer with a silane compound having at least one group which forms a silanol group through hydrolysis in the molecule.

The shape of the resin article which is coated with the composite coating film of the present invention is not limited, and is preferably a film or sheet.

Examples of the resin are acrylic resins, polycarbonate resins, polyester resins such as polyethylene terephthalate, cellulose resins such as triacetylcellulose and diacetylcellulose, styrenic resins, polyvinyl chloride resins and the like.

The resin may contain any conventional additives such as rubbers for improving impact resistance, UV light absorbers for improving weather resistance, as well as antioxidants, colorants and flame retardants for modifying respective properties.

The resin article may be an optical film or sheet having polarization properties, for example, an iodine- or dye-containing polarized light film or sheet comprising a polyvinyl alcohol resin, or a laminate comprising such a polarized light film or sheet and a cellulose resin sheet or film.

The film or sheet of the resin may be a single layer one or a multilayer one.

The thickness of the film or sheet depends on its final use, and is usually between 0.01 and 10 mm.

Examples of the polymerizable compound having at least two (meth)acryloyloxy groups in the molecule which is one of the components of the polymerizable composition are esters of (meth)acrylic acid with polyhydric alcohols, urethane-modified (meth)acryl oligomers obtained from compounds having terminal isocyanate groups and (meth)acrylic acid derivatives having a hydroxyl group.

Examples of the polyhydric alcohols are dihydric alcohols such as ethylene glycol, diethylene glycol, polyethylene glycol, propylene glycol, polypropylene glycol, propanediol, butanediol, pentanediol, hexanediol, neopentyl glycol, 2-ethyl-1,3-hexanediol, 2,2'-thiodiethanol, 1,4-cyclohexanedimethanol, etc.; and tri- and polyhydric alcohols such as trimethylpropane, pentaglycerol, glycerol, pentaerythritol, diglycerol, dipentaglycerol, etc.

To impart flexibility and prevent cracking of the hard coat layer formed from the polymerizable composition, a small amount of a polybasic unsaturated carboxylic acid may be added to (meth)acrylic acid for esterifying the polyhydric alcohols. In this case, the ester is a mixed ester. The amount of the polybasic unsaturated carboxylic acid is between 0.001 and 1 moles per one mole of (meth)acrylic acid.

Examples of the polybasic unsaturated carboxylic acid are succinic acid, tetrahydrophthatic acid, phthalic acid, maleic acid, fumaric acid, itaconic acid and the like.

The urethane-modified (meth)acryl oligomer can be prepared by reacting polyisocyanate (e.g. hexamethylene diisocyanate, isophorone diisocyanate, etc.) and an oligomer having at least two hydroxyl groups (e.g. polycaprolactonediol, polytetramethylenediol, etc.) to obtain isocyanate-terminated polyurethane and then subjecting the isocyanate-terminated polyurethane to a urethane-forming reaction with a (meth)acrylic acid derivative having a hydroxyl group (e.g. 2-hydroxyethyl (meth)acrylate, 2-hydroxypropyl (meth)acrylate, etc.).

Examples of the silane compound having at least one group which forms a silanol group through hydrolysis in the molecule are halogenosilane compounds (e.g. chlorosilane, etc.), alkoxysilane compounds, acyloxysilane compounds, silazane compounds and the like. Among such silane compounds, a saline compound of the formula (1):

Si(R¹)₄ (1)

wherein four R¹ groups independently represent
hydrolyzable groups, and silane compounds having one or more epoxy groups in the molecule are preferable. A mixture of the silane compound of the formula (1) and the silane compound having one or more epoxy groups in the molecule is more preferable.

Examples of the hydrolyzable groups represented by R¹ are halogen atoms, and the groups of the formulas: -OR⁴, -OCOR⁴, -OC(R⁴)=C(R⁵)₂, -ON=C(R⁴)₂ and -ON=CR⁶ wherein R⁴ is a C₁₋₁₀ aliphatic hydrocarbon group or a C₆₋₂₀ aromatic hydrocarbon group, R⁵ is a hydrogen atom or a lower (usually C₁₋₅) aliphatic hydrocarbon group, and R⁶ is a divalent C₃₋₆ aliphatic hydrocarbon group such as an alkylidene group. Among them, a chlorine atom, -OCH₃ and -OC₂H₅ are preferable.

Examples of the silane compound of the formula (1) are tetramethoxysilane, tetraethoxysilane, tetrachlorosilane and the like.

Examples of the silane compound having one or more epoxy groups are epoxy group-containing alkyltrialkoxysilanes, epoxy group-containing cycloalkylalkyltrialkoxysilanes, epoxy group-containing alkyltriacyloxysilanes and epoxy group-containing cycloalkylalkyltriacyloxysilanes (e.g. γ-glycidoxypropyltrimethoxysilane, γ-glycidoxypropylmethyldimethoxysilane, γ-glycidoxypropyltriethoxysilane, γ-glycidoxypropylmethyldiethoxysilane, γ-glycidoxypropyltriacetoxysilane, 2-(3',4'-epoxycyclohexyl)ethyltrimethoxysilane, 2-(3',4'-epoxycyclohexyl)ethylmethyldimethoxysilane, 2-(3',4'-epoxycyclohexyl)ethyltriethoxysilane, etc.)

Furthermore, the silane compound having at least one group which forms a silanol group through hydrolysis in the molecule includes dimethyldimethoxysilane, tetramethoxysilane, phenyltrimethoxysilane, vinyltrichlorosilane, vinyltriethoxysilane, γ-chloropropyltrimethoxysilane, γ-aminopropyltriethoxysilane, γ-mercaptopropyltrimethoxysilane, γ-glycidoxypropyltrimethoxysilane, γ-glycidoxypropylmethyldimethoxysilane, γ-methacryloxypropyltrimethoxysilane, γ-methacryloxypropylmethyldimethoxysilane, ethyltriacetoxysilane, vinyltriacetoxysilane, dimethyltrimethylsilylamine, N-trimethylsilylacetamide, hexamethyldisilazane, and also copolymers comprising polymerizable silane compounds such as γ-methacryloxypropyltrimethoxysilane and other polymerizable compounds (e.g. methyl methacrylate, methyl acrylate, butyl acrylate, etc.) (see JP-A-7-16940).

In addition, silicone oils comprising polydimethylsiloxane the terminals of which are modified with silanol can be used.

The amount of the silane compound in the polymerizable composition is between 1 and 30 wt. parts per 100 wt. parts of the polymerizable compound. When the amount of the silane compound is less than 1 wt. parts, the silane compound in the composition does not react sufficiently with the silane compound to be subsequently coated on the hard coat layer, and the required surface properties and durability are not attained. When the amount of the silane compound exceeds 30 wt. parts, the strength of the hard coat layer decreases.

The polymerizable composition of the present invention may contain conventional polymerization initiators or accelerators which are suitable for use in the below described polymerization and curing method, for example, free radical generators (e.g. azo compounds, organic peroxides, etc.), and photosensitizers such as carbonyl compounds (e.g. benzoin, benzoin methyl ether, benzoin ethyl ether, benzoin propyl ether, acetoin, benzil, benzophenone, p-methoxybenzophenone, etc.), tetramethylthiuram monosulfide, tetramethylthiuram disulfide, etc.

The amount of the polymerization initiators or accelerators is between 0.1 and 10 wt. parts per 100 wt. parts of the polymerizable compound.

Furthermore, the polymerizable composition of the present invention may contain conventional additives such as UV absorbers, light stabilizers and the like in an amount that the properties of the hard coat layer do not deteriorate. Examples of the UV absorbers are commercially available benzotriazoles, benzophenones and the like, and examples of the light stabilizers are hindered amines and the like. The amount of each of the UV light absorber and the light stabilizer is between 0.01 and 0.5 wt. part per 100 parts by weight of the polymerizable compound in the hard coat layer.

The polymerizable composition may be coated on the resin article by any conventional method such as spin coating, dip coating, roll coating, gravure coating, curtain flow coating and the like. The polymerizable composition may be diluted with various solvents to facilitate the coating procedure or to control the thickness of the hard coat layer.

The coated polymerizable composition may be cured by any conventional polymerization method such as heat polymerization comprising heating the composition or a photopolymerization method comprising irradiating the composition with actinic radiation such as ultraviolet ray or electron beams. Among them, the photopolymerization method is preferred.

The polymerizable composition of the present invention may contain a catalyst such as dilute aqueous solutions of hydrochloric acid, sulfuric acid or phosphoric acid; metal salts of aliphatic acids; metal alkoxides; and the like for accelerating the reaction between the surface of the resin article and the polymerizable composition.

The thickness of the hard coat layer is not limited, and is preferably between 1 and 20 µm in view of the reactivity with the silane compound which is subsequently coated on the surface of the hard coat layer and the strength of the hard coat layer.

Examples of the silane compound having at least one group which forms a silanol group through hydrolysis in the molecule which is coated on the surface of the hard coat layer are halogenosilane compounds (e.g. chlorosilane, etc.), alkoxysilane compounds, acyloxysilane compounds, silazane compounds and the like.

For example, the silane compound having at least one group which forms a silanol group through hydrolysis in the molecule includes dimethyldimethoxysilane, tetramethoxysilane, phenyltrimethoxysilane, vinyltrichlorosilane, vinyltriethoxysilane, γ-chloropropyltrimethoxysilane, γ-aminopropyltriethoxysilane, γ-mercaptopropyltrimethoxysilane, γ-glycidoxypropyltrimethoxysilane, γ-glycidoxypropylmethyldimethoxysilane, γ-methacryloxypropyltrimethoxysilane, γ-methacryloxypropylmethyldimethoxysilane, ethyltriacetoxysilane, vinyltriacetoxysilane, dimethyltrimethylsilylamine, N-trimethylsilylacetamide, hexamethyldisilazane, and also copolymers comprising polymerizable silane compounds such as γ-methacryloxypropyltrimethoxysilane and other polymerizable compounds (see JP-A-7-16940).

In addition, silicone oils comprising polydimethylsiloxane the terminals of which are modified with silanol can be used.

For imparting water-repellency, stain resistance and the like to the surfaces of the resin articles, a fluorine-containing silane compound of the formula (2): 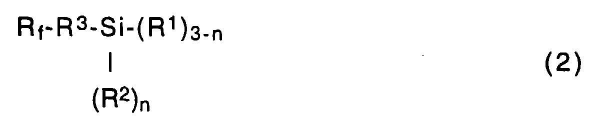 wherein R¹ is the same as defined above, R_{f} is a straight or branched C₁₋₁₆ perfluoroalkyl group, R² is a hydrogen atom or an inactive monovalent organic group, R³ is a divalent organic group, and n is an integer of 0 to 2 is preferably used.

In the formula (2), R_{f} is a straight or branched C₁₋₁₆ perfluoroalkyl group.

Examples of the hydrolyzable group for R¹ are the same as those exemplified in connection with the formula (1). Here, a chlorine atom, -COCH₃ and -OC₂H₅ are preferred.

R³ is a divalent organic group. Preferred examples of the divalent organic group are -CH₂CH₂-, -CH₂OCH₂CH₂CH₂-, -CONHCH₂CH₂CH₂-, -CONHCH₂CH₂NHCH₂CH₂CH₂-, -SO₂NHCH₂CH₂CH₂-, -CH₂CH₂OCONHCH₂CH₂CH₂- and the like.

R² is a hydrogen atom or an inactive monovalent organic group, for example, a monovalent C₁₋₄ hydrocarbon group.

Specific examples of the fluorine-containing silane compound of the formula (2) are CF₃CH₂CH₂Si(OCH₃)₃, C₄F₉CH₂CH₂-Si(CH₃)(OCH₃)₂, C₈F₁₇CH₂CH₂Si(OCH₃)₃, C₈F₁₇CH₂CH₂Si(OC₂H₅)₃, C₈F₁₇CH₂CH₂SiCl₃, (CF₃)₂CF(CF₂)₈CH₂CH₂Si(OCH₃)₃, C₁₀F₂₁CH₂CH₂-Si(OCH₃)₃, C₁₀F₂₁CH₂CH₂SiCl₃ and the like.

To obtain the coating film having excellent stain resistance, a fluorine-containing sane compound of the formula (3): 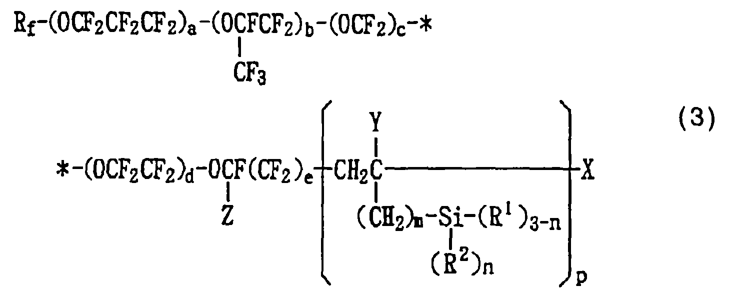 wherein R_{f}, R¹ and R² are the same as defined above, X is an iodine or hydrogen atom, Y is a hydrogen atom or a lower (for example, C₁₋₅) alkyl group, Z is a fluorine atom or a trifluoromethyl group, a, b, c and d are each an integer of 0 to 200, e is 0 or 1, m and n are each an integer of 0 to 2, and p is an integer of 1 to 10 is preferably used.

Preferred example of the perfluoroalkyl group for R_{f} in the formula (3) are CF₃-, C₂F₅- and C₃F₇-.

Examples of the hydrolyzable group for R¹ are the same as those exemplified in connection with the formula (1). A chlorine atom, -COCH₃ and -OC₂H₅ are preferred again.

R² is a hydrogen atom or an inactive monovalent organic group, preferably a monovalent C₁₋₄ hydrocarbon group.

Preferably, a, b, c and d are each an integer of 1 to 50, and m and n are each 0.

The molecular weight of the compound of the formula (3) is usually between 5 x 10² and 1 x 10⁵, preferably between 5 x 10² and 1 x 10⁴.

A preferred example of the fluorine-containing silane compound of the formula (3) is a compound of the formula (4): 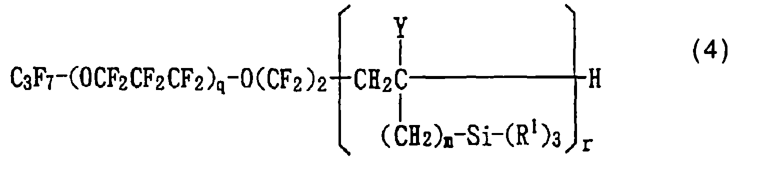 wherein R¹, Y and m are the same as defined above, r is an integer of 1 to 10, and q is an integer of 1 to 50.

These fluorine-containing silane compounds may be prepared by treating commercially available perfluoropolyethers with silane compounds. This preparation method is disclosed in US Patent No. 5,081,192 and EP-A-0 343 526, the disclosures of which are herein incorporated by reference, and corresponding JP-A-1-294709.

The silane compound may be diluted with solvents prior to coating on the hard coat layer. In general, water is used as a solvent, while general organic solvents may be used depending on the solubility of the silane compound in the solvents. Examples of the organic solvents are aromatic hydrocarbons (e.g. benzene, toluene, xylene, etc.), ketones (e.g. acetone, methyl ethyl ketone, methyl isobutyl ketone, etc.), esters (e.g. ethyl acetate, isobutyl acetate, etc.), chlorohydrocarbons (e.g. methylene chloride, trichloroethylene, chloroform, etc.), alcohols (e.g. ethanol, 1-propanol, 2-propanol, 1-butanol, etc.) and the like.

The fluorine-containing silane compounds of the formulas (3) and (4) may be diluted with fluorohydrocarbon solvents such as perfluorohexane, perfluoromethylcyclohexane, perfluoro-1,3-dimethylcyclohexane and the like.

The silane compound to be coated on the hard coat layer or its solution may contain a catalyst such as dilute aqueous solutions of hydrochloric acid, sulfuric acid or phosphoric acid; metal salts of aliphatic acids; metal alkoxides; and the like for accelerating the reaction between the surface of the hard coat layer and the sane compound which forms the outermost layer of the composite coating film.

The silane compound or its solution may be coated on the hard coat layer which has been formed on the surface of the resin article by any conventional method such as spin coating, dip coating, roll coating, gravure coating, curtain flow coating and the like.

Then, the coated silane compound is optionally heated and dried to form the layer of the silane compound on the hard coat layer.

The thickness of the silane compound layer is not limited, and is preferably between 0.001 and 20 µm in view of the stain resistance and strength. When the fluorine-containing silane compounds of the formulas (3) and (4) are used, the thickness of the silane compound layer is preferably between 0.001 and 0.5 µm.

### EXAMPLES

The present invention will be illustrated by the following Examples.

The properties in the Examples were measured as follows:

### (1) Contact angle

Using a contact angle meter (Type CA-A manufactured by KYOWA KAIMENKAGAKU KABUSHIKIKAISHA), a water droplet having a diameter of 1.0 mm was formed on the tip end of a needle at room temperature and transferred onto the surface of a sample by touching the droplet to the surface. Then, an angle between the droplet surface and the surface of the sample was measured as a contact angle.

### (2) Durability

The durability was evaluated by reciprocally wiping the surface of a sample with a cellulose nonwoven fabric (BENCOT manufactured by ASAHI CHEMICAL Co., Ltd.) 20 times, and then measuring a contact angle to water in the same manner as described above.

### (3) Adhesion of fingerprint

A right hand thumb was pressed onto the surface of a sample for 3 seconds to leave the fingerprint, and easiness of leaving and clearness of the left fingerprint were evaluated and ranked according to the following criteria:
- O:: The fingerprint is slightly left, but the left fingerprint was faint.
- X:: The left fingerprint was clearly recognized.

### (4) Wiping off of fingerprint

The left fingerprint was wiped off with a cellulose nonwoven fabric, and easiness of the wiping off of the fingerprint was evaluated with an eye and ranked according to the following criteria:
- O:: The fingerprint was wiped off completely.
- △:: The trace of the fingerprint was left.
- X:: The trace of the fingerprint remained and was hardly removed.

### Reference Examples

### (1) Preparation of a polymerizable composition solution

One or more silane compounds shown in Table 1 (15 wt. parts per 100 wt. parts of the solid content in a hard coat) were added to a urethane acrylate base hard coat agent (UNIDEX 17-806 available from DAINIPPON INK AND CHEMICALS, INC.) which had been diluted with toluene to a solid content of 30 wt. %, and stirred for one hour.

### (2) Preparation of a silane compound solution (1)

Perfluorooctylethyltrimethoxysilane [C₈F₁₇CH₂CH₂Si(OCH₃)₃] was diluted with isopropanol to obtain a solution having a concentration of 2.0 g/liter. A 0.1 N aqueous solution of hydrochloric acid (3 wt. parts) was added to the diluted silane compound (100 wt. parts) and stirred for 2 hours.

### (3) Preparation of a silane compound solution (2)

The perfluoropolyethersilane compound of the formula: 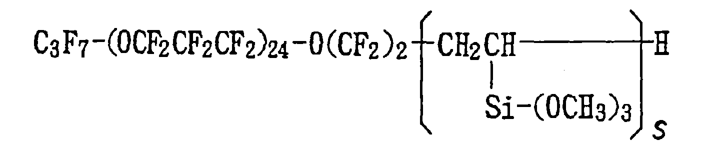 wherein S is an integer of 1 to 10 (average value is 2) (available from DAIKIN INDUSTRIES, LTD. molecular weight of about 5000) was diluted with perfluorohexane to obtain a solution having a concentration of 2.0 g/liter.

### Examples 1-8 and Comparative Examples 1-2

An acrylic resin plate (SUMIPEX E manufactured by Sumitomo Chemical Co., Ltd.) having the size of 200 x 300 x 2 mm was dipped in the above prepared polymerizable composition solution and pulled up at a rate of 30 cm/min., and the solution was coated on the surfaces of the plate. The kind(s) and concentration of the silane compound are shown in Table 1.

The coated solution was then irradiate with a metal halide lamp of 120 W (UB 0451 manufactured by EYEGRAPHICS, INC.) from a distance of 20 cm for 10 seconds, and a hard coat layer was formed.

The acrylic resin plate carrying the hard coat layer was dipped in the silane compound solution (1) or (2) prepared in Reference Examples and pulled up at a rate of 15 cm/min., and the solution was coated on the hard coat layer. Then, the plate was kept at room temperature for one day to evaporate the solvent, and the stain-resistant resin plate having the layer of the fluorine-containing silane compound was obtained.

The results of the evaluations are shown in Table 2.

**Table 1**

| Example No. | Silane compound(s) in polymerizable composition | Silane compound solution |
|---|---|---|
| Ex. 1 | TMS | (1) |
| Ex. 2 | GPTMS | (1) |
| Ex. 3 | TMS and GPTMS (3:1 by weight) | (1) |
| Ex. 4 | MPTMS | (1) |
| Ex. 5 | TMS | (2) |
| Ex. 6 | GPTMS | (2) |
| Ex. 7 | TMS and GPTMS (3:1 by weight) | (2) |
| Ex. 8 | MPTMS | (2) |
| Comp. Ex. 1 | None | (1) |
| Comp. Ex. 2 | None | (2) |
| Notes: TMS: Tetramethoxysilane. GPTMS: γ-Glycidoxypropyltrimethoxysilane. MPTMS: γ-Methacryloxypropyltrimethoxysilane. | | |

**Table 2**

| Example No. | Contact angle (degrees) | Durability (degrees) | Adhesion of fingerprint | Wiping of fingerprint |
|---|---|---|---|---|
| Ex. 1 | 111.3 | 102.9 | △ | △ |
| Ex. 2 | 95.2 | 93.1 | △ | △ |
| Ex. 3 | 112.4 | 104.7 | △ | △ |
| Ex. 4 | 104.2 | 102.3 | △ | △ |
| Ex. 5 | 112.5 | 103.4 | O | O |
| Ex. 6 | 97.1 | 92.4 | O | O |
| Ex. 7 | 111.5 | 105.9 | O | O |
| Ex. 8 | 105.1 | 103.3 | O | O |
| Comp. Ex. 1 | 92.4 | 76.5 | △ | X |
| Comp. Ex. 2 | 95.3 | 78.4 | O | X |

## Claims

1. A composite coating film comprising:
a hard coat layer which is formed from a polymerizable composition comprising 100 wt. parts of a polymerizable compound having at least two (meth)acryloyloxy groups in the molecule and 1 to 30 wt. parts of a silane compound having at least one group which forms a silanol group through hydrolysis in the molecule, and
a layer of a silane compound having at least one group which forms a silanol group through hydrolysis in the molecule formed on said hard coat layer.

2. The composite coating film according to claim 1, wherein said silane compound in the polymerizable composition is a silane compound of the formula (1):
Si(R¹)₄ (1)
wherein four R¹ groups independently represent
hydrolyzable groups.

3. The composite coating film according to claim 1, wherein said silane compound in the polymerizable composition is a silane compound having at least one epoxy group in the molecule.

4. The composite coating film according to any of claims 1 to 3, wherein said silane compound in the polymerizable composition is a mixture of at least two silane compounds.

5. The composite coating film according to any of claims 1 to 4, wherein said silane compound coated on said hard coat layer is a fluorine-containing silane compound of the formula (2): 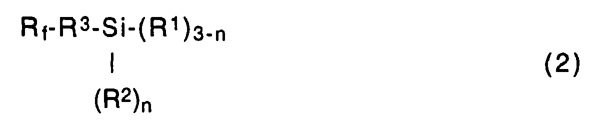 wherein R_{f} is a straight or branched C₁₋₁₆ perfluoroalkyl group, R¹ is a hydrolyzable group, R² is a hydrogen atom or an inactive monovalent organic group, R³ is a divalent organic group, and n is an integer of 0 to 2.

6. The composite coating film according to any of claims 1 to 5, wherein said silane compound coated on said hard coat layer is a fluorine-containing silane compound of the formula (3): 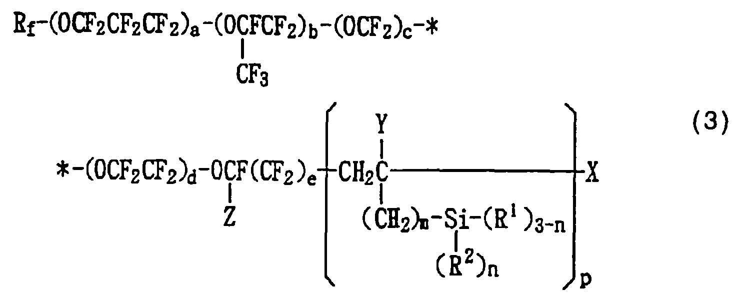 wherein R_{f} is a straight or branched C₁₋₁₆ perfluoroalkyl group, R¹ is a hydrolyzable group, R² is a hydrogen atom or an inactive monovalent organic group, X is an iodine or hydrogen atom, Y is a hydrogen atom or a lower alkyl group, Z is a fluorine atom or a trifluoromethyl group, a, b, c and d are each an integer of 0 to 200, e is 0 or 1, m and n are each an integer of 0 to 2, and p is an integer of 1 to 10.

7. The composite coating film according to any of claims 1 to 6, wherein said silane compound coated on said hard coat layer is a fluorine-containing silane compound of the formula (4): 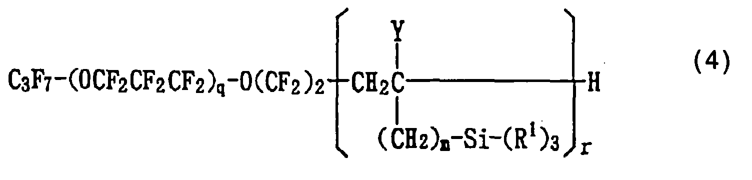 wherein R¹ is a hydrolyzable group, Y is a hydrogen atom or a lower alkyl group, r is an integer of 1 to 10, q is an integer of 1 to 50 and m is an integer of 0 to 2.

8. A method for forming a composite coating film according to any of claims 1 to 7, comprising a silane compound, which method comprises the steps of:
(1) coating the surface of a resin article with a polymerizable composition which comprises 100 wt. parts of a polymerizable compound having at least two (meth)acryloyloxy groups in the molecule and 1 to 30 wt. parts of a silane compound having at least one group which forms a silanol group through hydrolysis in a molecule and curing the coated polymerizable composition to form a hard coat layer, and
(2) coating the surface of said hard coat layer with a silane compound having at least one group which forms a silanol group through hydrolysis in the molecule.
